# EUROPEAN PATENT APPLICATION

(11) **EP 1 198 119 A2**
(43) Date of publication of application: **17.04.2002**
(21) Application number: 01124155.1
(22) Date of filing: 10.10.2001
(51) Int. Cl.: H04N 1/04

(54) **Improved resolution for an electric image sensor array**

(30) Priority: 11.10.2000 EP 00122032; 20.11.2000 EP 00125188
(71) Applicant: Parsons, Charles E., 86444 Affing (DE)
(72) Inventor: Parsons, Charles E., 86444 Affing (DE)
(74) Representative: Gallo, Wolfgang, Dipl.-Ing. (FH)

(57) **Abstract**

Actual resolution improvement of an electric sensor array obtained by displacement between the array and a partially occluding mask/light source, and calculating the improved resolution grey scales from the changes in the array's output.

## Description

### 2. Introduction.

The principle of improving the resolution of an Electronic Image Sensor Array, by calculations based on the changes in the array's charges caused by movement of the sensor relative to the image, and associated with an occluding Mask / Light Source, were introduced in the EPO applications number 00122032 . 6 dated 11 October 2000, and 00125188. 3 dated 20 November 2000. This application is based on the above EPO applications, to which it claims priority.

### 3. Claim

The invention is characterised by producing an improvement to the resolution of a sensor array due to the introduction of a mask / light source between the Sensor array and the image. The mask / light source is characterised in that its position can partially affect selected sensors in the array. The sensor array is characterised in that there can be displacement with respect to the mask / light source and / or the image, The amount of displacement is characterised by being dependent on the amount of resolution improvement required. The grey scale values for the improved resolution are characterised by being calculated by reference to the different changes in the charges of the array's individual sensors as the displacement causes the relationship between sensors and the image to successively change.

### 4. Brief description of one Application of the Invention

Note 1. A simple rectangular black/white sensor array, whose peripheral light sensitive elements can be partially occluded by an image stabilised mask, is assumed in the following descriptions, in order to simplify the explanations, but the same principles, with the applicable image manipulation, also apply to an array designed for use in colour application (colour sensor array). A device producing a fourfold improvement of the original sensor array's resolution is described as an example.
Note 2. The following descriptions deal with the case where displacement between the sensor, and the mask/image, is obtained by displacing the sensor with respect to the mask and image, but the invention, explanations and descriptions together with the appropriate scan synchronisation, are also applicable in the case where the mask and/or image are displaced with respect to the sensor.
Note 3. Where resolution improvement of a sensor is required when there is independent movement between the sensor and the image, the same principles will also apply, but there would need to be compensation for this movement. In this case, the movement can be utilised to improve the resolution in the axis of movement by synchronously increasing the array's sample rate ( paragraph 19 refers ).
Note 4. The single row sensor array, where there is displacement between the sensor array and the image as in a scanner, would be an special development of the arrangement in Note 3. In this case, the same principles, with the appropriate compensation for the image movement, will still apply. (para. 18 refers )

a. In this application of the invention, a Mask is positioned so that it occludes half of the light sensitive element of the array's non corner, peripheral sensors. This results in 3/4 of each of the 4 corner sensors being so occluded.
b. The sensor array is displaced under the mask, with respect to the image, in the array's row axis (across) and column axis (down), by an amount equal to half the individual sensor's light sensitive element's dimensions, in the array's across, and down axis.

This produces 4 quarter resolution segments for each of the array's sensors.
c. The array's sensors' outputs are stored, and the grey scale values for the quarter resolution segments, are calculated from the sensors' outputs in the following four different cases. Three of these involve the sensor being displayed by a half resolution distance, with respect to the image.
   1.) The neutral, not displaced position.
   2.) The full half resolution displacement in only the array's across axis.
   3.) The full half resolution displacement in only the array's down axis.
   4.) The full half resolution displacement in the combined across and down axis.

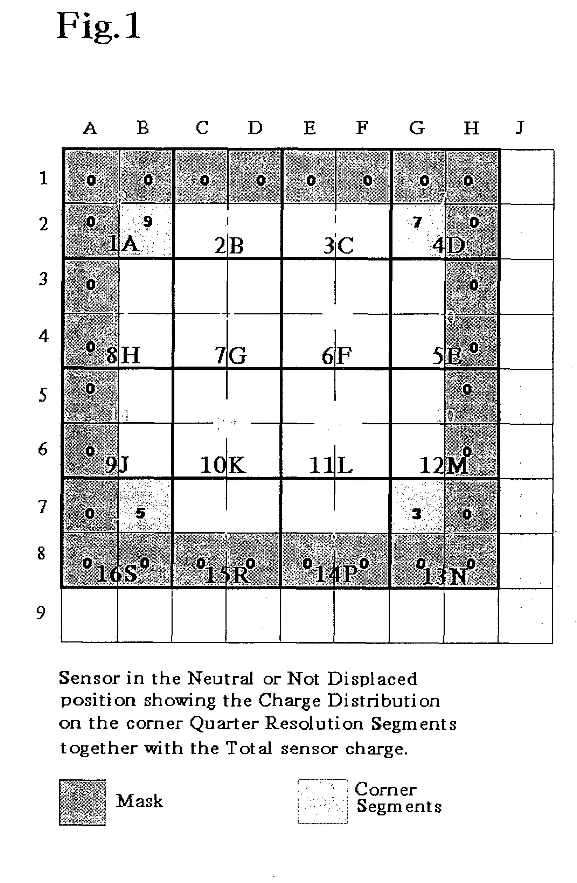

### 5. Detailed description of a typical device producing a fourfold improvement to a theoretical 16 sensor Black / White array, arranged in 4 rows of 4 sensors in 4 columns. (Fig 1 refers)

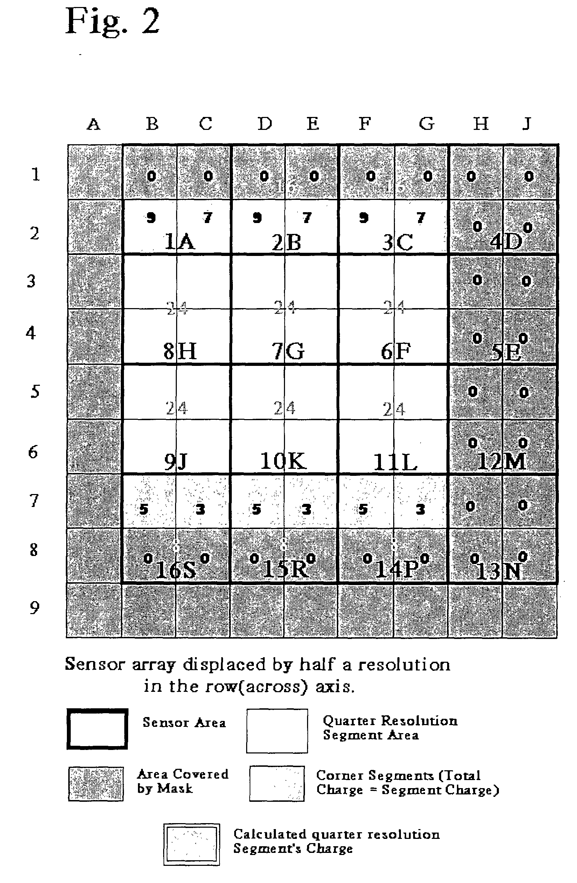

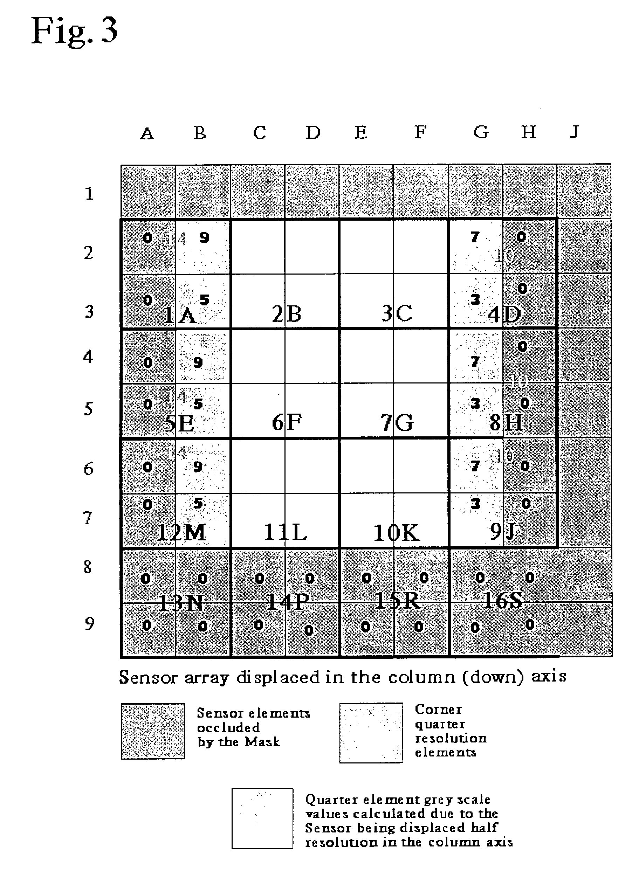

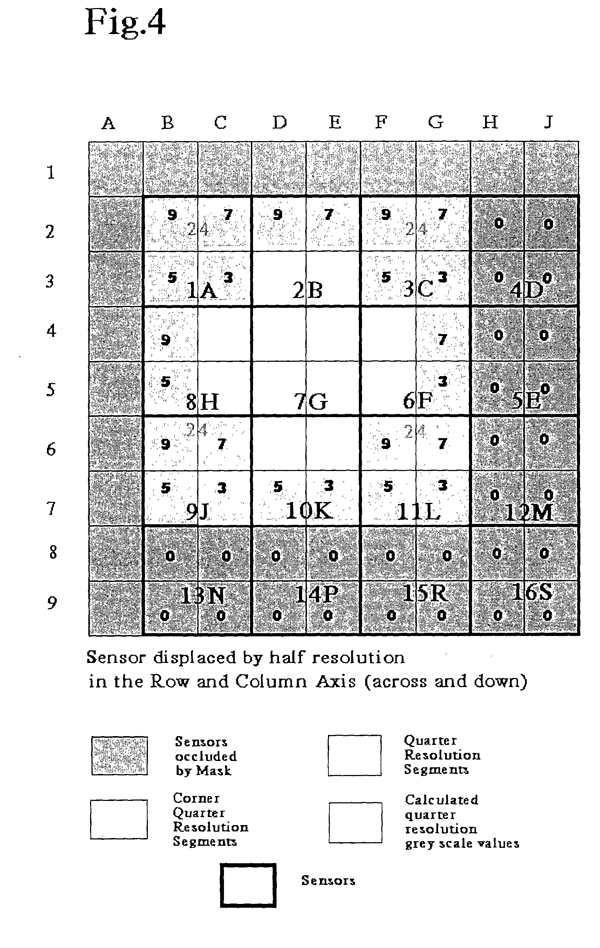

a. Note 5. In the various accompanying drawings, the quarter resolution segments are identified with respect to the mask, by letters (A to J) for the columns, and by numbers (1 to 9) for the rows. Thus the four corner, not occluded, one quarter resolution segments in fig. 1 are B2,B7G2,G7. As the array is moved with reference to the image, so these identifications will refer to different positions on the respective sensor. The 16 sensors forming the array are identified alpha-numerically 1A to 16S, as shown in fig.1. The position of the sensor is highlighted in the various drawings by the enhanced lines. The thin lines refer to the four quarter resolution sectors of each individual sensor's light sensitive area. The charges allocated to each sensor and quarter resolution segment for the purpose of this explanation, are set out in para. 5.i.
b. Calculations.
   The various calculations performed, in order to establish the improved resolution's grey scales, are made using normal, State of the Art digital techniques, on the Array's output after it has been converted to a digital form. Only one of the various combinations for arriving at the improved resolution's grey scales is discussed.
c. Device construction
   The device is so constructed, that the position of the sensor array, with respect to the image, in the row (across) axis, and column (down) axis, can be varied by an electronic control signal applied to piezo-electric wafers forming part of the mounting or the array's sub-structure, which cause the physical dimensions of the wafers to vary, and thus alter the position of the sensor array in these axis, with respect to the image.
d. Rectangular mask construction.
   1) A rectangular mask is constructed so that it's size is such that it allows it to just occlude half of the light sensitive element of the peripheral non corner sensors. It is mounted on the sensor array in such a way that the mask's position relative to the image can be space stabilised by piezo-electric wafers in both the row and across axis. These are controlled by suitable control signals, that result in counter movements of the mask, which cancel any movement of the mask due to the sensor array (para.4.b. refers).
   2) The mask is initially positioned relative to the sensor array, so that it just occludes half of the light sensitive areas of each of the non-corner, peripheral sensors (fig. 1 refers), and 3/4 of the corner sensors' light sensitive areas, when the array and the mask are both in their neutral, not displaced position.
e. Sensor array in the neutral or not displaced position (fig. 1).
   1.) In the neutral position of the sensor array, due to the corners of the mask, each of the corner sensors 1A, 4D, 13N, and 16S, have only a quarter of their light sensitive area exposed to the image (quarter segments B2,B7,G2,G7, fig. 1 refers). The analogue charge is therefore proportional to the grey scale of the image falling on an area one quarter the size of the original sensor.
   2.) The other peripheral sensors between the corners are each half occluded. so their charge is proportional to the grey scale of the image falling on an area one half the area of the original sensor (resolution quarter segments C2D2, E2F2, G3G4, G5G6, B3B4, B5B6, C7D7, E7F7. fig.1 refers).
f. Displacing the sensor array a half resolution in the across axis (fig.2).
   1.) Displacing the sensor array a distance equal to half the dimension of the original resolution in the across axis, will produce a value for the not occluded individual quarter resolution segments of the across axis peripheral sensors. Segment C2 is now paired with segment B2, whose grey scale charge is known from the not deflected state (fig2. refers).
   2.) As the sum of the charge from segments B2+C2 (fig.2) is the total charge of the sensor 1A (the other half of the sensor 1A is occluded by the mask so the charge due to the light falling on it is the sum of the two quarter segments B2 and C2), and as B2 is known, then C2 can be calculated.
   3.) In a similar way the individual values for the rest of the across peripheral segments can also be calculated. (D2, E2, F2, C7, D7, E7, F7).
g. Displacing the sensor array a half resolution in the down axis (fig.3).
   Displacing the sensor array a half resolution in the down axis will enable the quarter resolution grey scale values to be similarly calculated for the remaining peripheral quarter resolution segments.
h. Displacing the sensor a half resolution in the across and down axis (fig.4).
   Displacing the sensor a half resolution in the across as well as in the down axis will enable the rest of the remaining quarter resolution grey scale values to be calculated from the change in sensor charge when compared with the known quarter resolution segments, as just calculated. (fig. 3 and fig. 4 refer.)
i. A summary of the various individual charges, together with the total sum charges is shown in Table 1, for a fictional example where the video grey scales produced by a not displaced sensor array, will produce on each non occluded sensor a total charge of decimal value of 24, due to individual quarter resolution values of 3,5, 7 ,9 (top left, top right, bottom right, bottom left segments in each individual sensor.)

### 6. One method for digitally implementing the operations listed in Para 5.

a. A programme of instructions is loaded into a control computer that implements the following actions:-
   1.) Provides timing signals to implement the following actions in the correct sequence.
   2.) Loads the digital grey scale value of each sensor into a different area of temporary memory for each of the following cases:-
      a.) Sensor array not displaced, para. 4.c.1.) refers (Memory area 1).
      b.) Sensor array displaced fully across, para. 4.c.2.) refers (Memory area 2).
      c.) Sensor array displaced fully down, para 4.c.3.) refers (Memory area 3).
      d.) Sensor array displaced fully across and down, para 4.c.4.) refers (Memory area 4).
   3.) With reference to a control counter, loads into different areas of temporary memory the four quarter resolution values for each of the sensors in each of the four cases in para. 6. a. 2.), as they are calculated.
      a). Sensor array not displaced (Memory area 5).
      b). Sensor array displaced fully across (Memory area 6).
      c). Sensor array displaced fully down (Memory area 7).
      d). Sensor array displaced fully across and down (Memory area 8).
   4.) De-increments a sensor counter for each of the sensors in para. 6 a 3), from a count of 4 to 0, to show how many of the sensors' quarter resolution segments have a grey scale value that is 0.
   5.) Increments a segment state counter from 0 to 36, to show how many of the quarter resolution segments exposed in the not displaced state have a grey scale that is not 0.
   6.) Transfers the content of Memory 5 (not displaced quarter resolution) into Permanent Memory , when the count reaches 36, so that a bit map can be constructed when all quarter resolution grey scale values have been calculated.
   7.) Initially sets the content of all of the following to zero:-
      a.) All sensor memory addresses [para. 6.a.2.)].
      b.) All sensor quarter resolution memory addresses [para. 6.a.3.)].
      c.) Initially sets all the sensor counters [para. 6.a.4.)] to a count of 4.
   8.) Increments a control counter from 0 to 3 corresponding to the four displacement states of the sensor array (paras. 5e to 5h) in order to enable the actions in para. 6.a.3.) to be accomplished.
      d.) Count 0 = Sensor array not displaced (para 5e).
      e.) Count 1 = Sensor array displaced fully across (para. 5f).
      f.) Count 2 = Sensor array displaced fully down. (para. 5g).
      g.) Count 3 = Sensor array displaced fully across and down. (para 5h).
   9.) Provides deflection signals to the piezo-electric wafers controlling the position of the sensor array and mask so that the sensor array is correctly displaced with respect to the image, and the mask is space stabilised with respect to the image (Paras. 5c. and 5d. refer.)
   10.) Arranges the following comparisons, calculations and data transfers, depending on the displacement of the sensor array, as shown by the control counter [para. 6.a. 8.) refers.], the sensor counters [para.6.a.4.)]. the sensor segment state counter [para 6.a.5.)]. and the data transfer state [6.a.6.)]. :-
      a.) Calculating the corner quarter resolution values (para. 5.e. refers). and transferring this value to the quarter resolution Memories.
      b.) Calculating the across peripheral quarter segment values (para 5.f.refers), and transferring this value to the quarter resolution Memories.
      c.) Calculating the down peripheral quarter segment values (para.5.g. refers), and transferring this value to the quarter resolution Memories.
      d.) Calculating the remaining unknown sensor quarter resolution values for those sensors where the sensor state counter shows only one segment with a value of zero [para. 6.a.4.)]. and transferring these values to the quarter resolution memories.

### 7. The principles governing the construction of the device described in para. 5 are:-

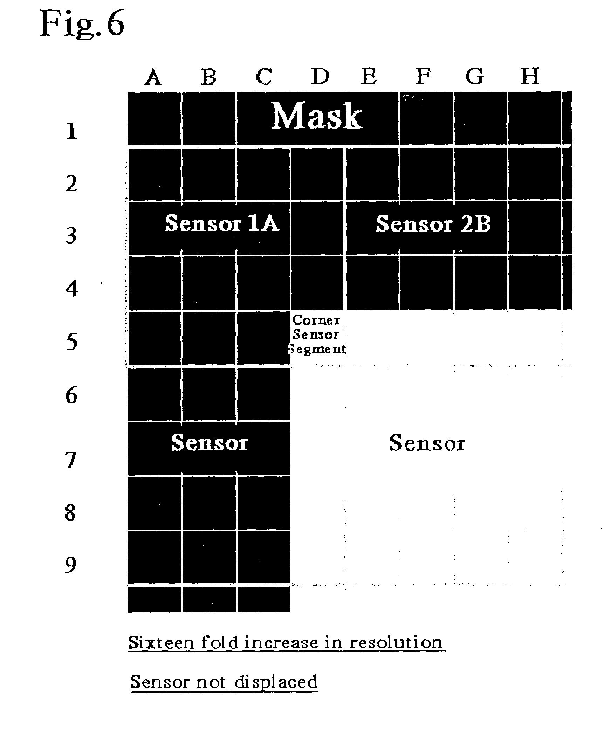

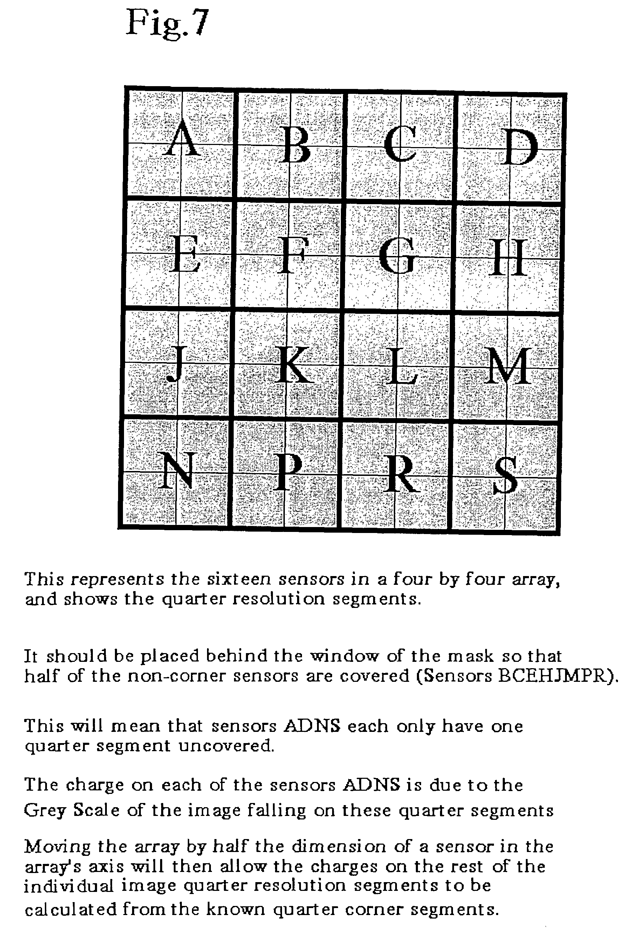

a. The sensor array must be capable of independent. controlled movement in the across and down axis so that the sensor array can be displaced a distance of a half the resolution of the image in these axis, with respect to the image.
b. The position of the mask must remain fixed with respect to the image, as the sensor array is displaced. This means that if the mask is mounted on the sensor array, then a displacement of the mask must take place that is opposite to that of the sensor array, and of such a magnitude that the position of the mask remains fixed with respect to the image.
c. The sensor array and the mask in this example must both independently have freedom of movement in order to be displaced in the across axis and the down axis, due to the forces exerted by their respective piezo-electric wafers.

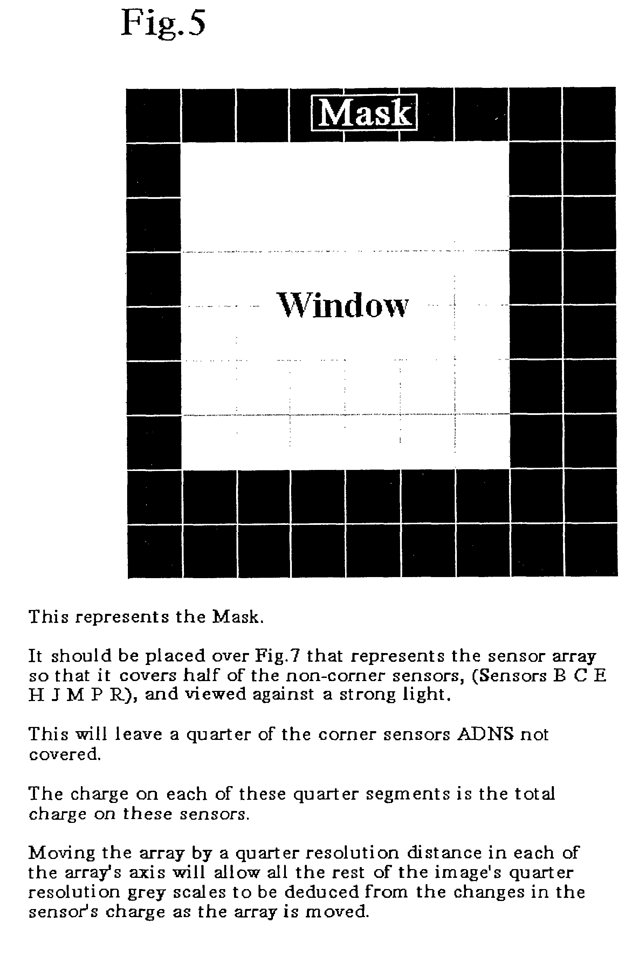

d. Fig.5 shows the mask for a fourfold resolution improvement.
e. A sixteen fold resolution improvement would require a multiple combination of 3 sensor/image displacements in each of the down, across, and down and across axis. Each displacement being a quarter the original resolution cell dimensions. It would also require a mask that occludes 15/16ths. of the corner sensors' light sensitive area. and one quarter the other peripheral sensors' light sensitive areas (Fig.6 refers).
   1.) The enhanced resolution calculations will require multiple memories for each of the various sensor array positions, including the not displaced position.
   2.) With ref. to fig.6, The corner (D5) enhanced segment's charge, is the same as the total sensor charge on sensor 1A. Successively displacing the sensor array in the across direction by 1/4 the original resolution dimension, results in values for the enhanced resolution segments E5, F5 G5. As the sum of the segments E5,F5,G5,H5 is known from the not displaced position of sensor 2B, the unknown charge on segment H5 can be calculated.
   3.) As sensor 2B is displaced in the across direction. its charge will change. Because the original charge of sensor 2B is known, each change is due to the difference between the charge on the new enhanced segment being viewed, and the charge on the segment that sensor 2B is no longer viewing, The charge on the latter have been calculated from sensor 1A, so the new enhanced segments of sensor 2B can also be calculated.
   4.) Displacing the sensor array in the down direction will allow all of rest of the peripheral enhanced segments to be calculated.
   5.) Further displacements of the sensor array in the down, across, and down and across directions produce new segment sums, which allow the complete enhanced resolution segment values to be calculated.

### 8. Construction problems will mean that in a practical device, light seepage will affect the charge of the array's occluded segments, but these changes can be allowed for by introducing correction constants in the digital calculations.

### 10. In Fig. 1, The sensor Identifications and locations are:-

Sensor 1A, A1B1B2A2. Sensor 2B, C1D1D2C2. Sensor 3C, E1F1F2E2. Sensor 4D, G1H1H2G2.
Sensor5E, G3H3H4G4. Sensor 6F, E3F3F4E4. Sensor 7G, C3D3D4C4. Sensor 8H, A3B3B4A4.
Sensor 9J, A5B5B6A6. Sensor 10K, C5D5D6C6. Sensor 11L, E5F5F6E6. Sensor 12M, G5H5H6G6.
Sensor 13N, G7H7H8G8. Sensor 14 P, E7F7F8E8. Sensor 15 R, C7D7D8C8. Sensor 16S, A7B7B8A8.

The peripheral pairs are C2D2, E2F2, C7D7, E7F7.

### 11. In Fig. 2, The sensor Identifications and locations are:-

Sensor 1A, B1C1C2B2. Sensor 2B, D1E1E2D2. Sensor 3C, F1G1G2F2. Sensor4D, H1J1J2H2.
Sensor 5E, H3J3J4H4. Sensor 6F, F3G3G4F4. Sensor 7G, D3E3E4D4. Sensor 8H, B3C4C4B4.
Sensor 9J, B5C5C6B6. Sensor 10K, D5E5E6D6. Sensor 11L, F5G5G6F6. Sensor 12M, H5J5J6H6.
Sensor 13N, H7J7J8H8. Sensor 14P, F7G7G8F8. Sensor 15R, D7E7E8D8. Sensor 16S, B7C7C8B8.

### 12. In Fig. 3, The Sensor Identifications and locations are:-

Sensor 1A, A2B2B3A3. Sensor 2B, C2D2D3C3. Sensor 3C, E2F2F3E3. Sensor 4D, G2H2H3G2.
Sensor 5E, G4H4H5G5. Sensor 6F, E4F4F5E5. Sensor 7G, C4D4D5C5. Sensor 8H, A4B4B5A5.
Sensor 9J, A6B6B7A7. Sensor 10K. C6D6D7C7. Sensor 11L, E6F6F/E7. Sensor 12M, G6H6H7G7.
Sensor 13N, G8H8H9G9. Sensor 14P. E8F8F9E9. Sensor 15R, C8D8D9C9. Sensor 16S, A8B8B9A9.

### 13. In Fig. 4, The Sensor Identification and locations are:-

Sensor 1A, B2C2C3B3. Sensor 2B, D2E2E3D3. Sensor 3C, F2G2G3F3. Sensor 4D, H2J2J3H3.
Sensor 5E, H4J4J5H5. Sensor 6F, F4G4G5F5. Sensor 7G, D4E4E5D5. Sensor 8H, B4C4C5B5.
Sensor 9J, B6C6C7B7. Sensor 10K, D6E6E7D7. Sensor 11L, F6G6G7F7. Sensor 12M, H6J6J7H7.
Sensor 13N, H8J8J9H9. Sensor 14P, F8G8G9F9. Sensor 15R, D8E8E9D9. Sensor 16S, B8C8C9B9.

### 14. In Fig. 4,

Note 6. In those segments where only one quarter segment grey scale value is
tinknowm, its grey scale value is the difference between the total sensor charge, and the
sum of the charges on the known quarter segments.

### 15. In Fig. 6, The not occluded segment of sensor 1A is:- D5

The Occluded sensor positions of sensor 1A are:-
A2B2C2D2, A3B3C3D3, A4B4C4D4, A5B5C5.

### 16. Note7. In Table 1, not all the different combinations for calculating the various unknown values have been listed.

### 17. Improved Resolution using Max. White as the Reference Level

For some applications, using maximum White as a reference level (Light Mask), is an elegant solution for improving the resolution of an Opto-Electronic Sensor array, as it requires no moving parts. In this application of the invention, a LED array provides the light source, which is collimated with the image through a lens onto the sensor array. This will allow selected LED's to be illuminated. If these LED's form an illuminated grid with arms that are a half resolution wide, that produces maximum white conditions on adjacent quarter resolution segments of adjacent row and column sensors, and the position of the network formed is moved by selecting different LED's for illumination, then four movements will identify the enhanced resolution grey scales. The fallout advantages are that using a lens for the LED array, will bring the mechanical tolerances within the capability of a qualified tradesman. By combining the two techniques, improvements of better than 4 times should now be feasible with minimum sampling. The use of a half resolution wide net should also reduce the effect of light contamination.

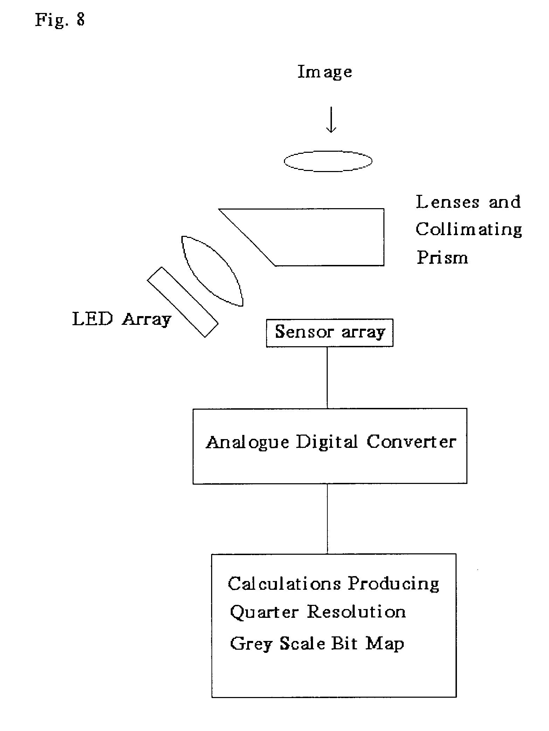

The sketch in Fig.8 shows a schematic of the arrangement.

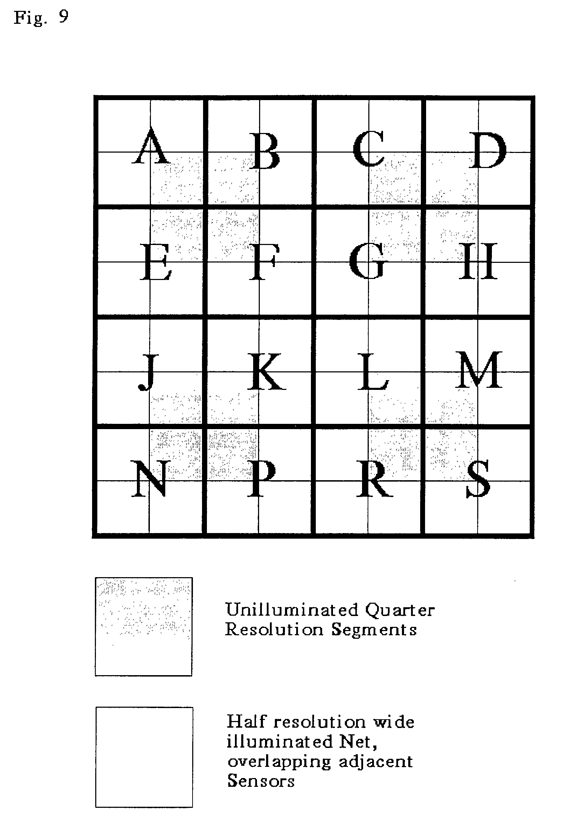

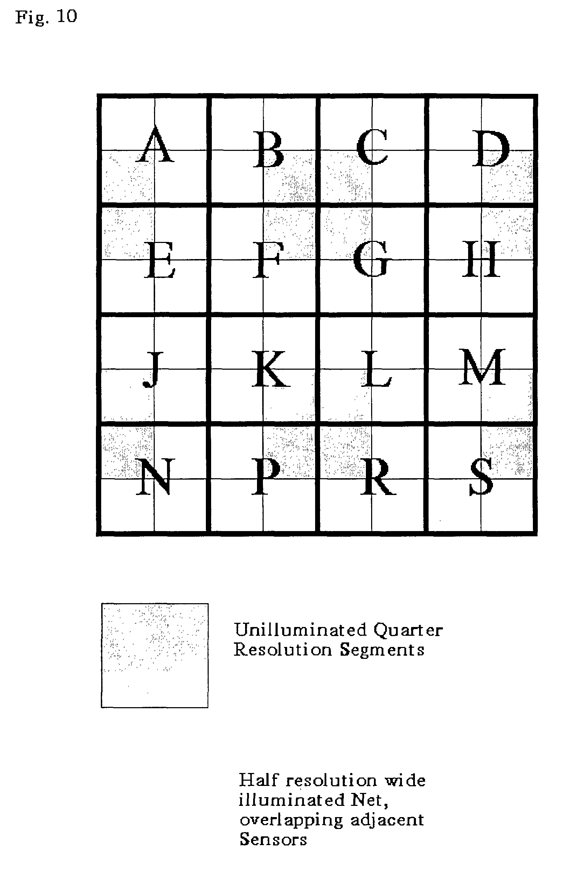

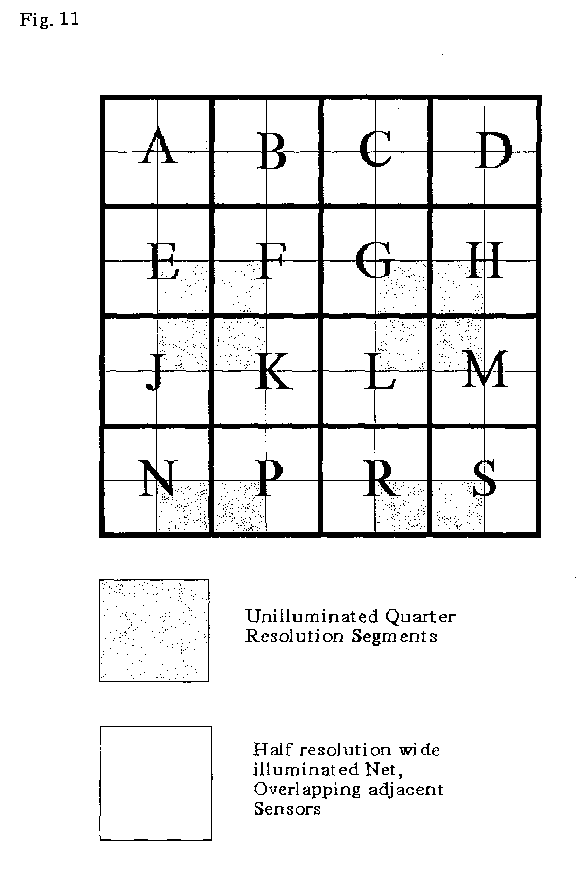

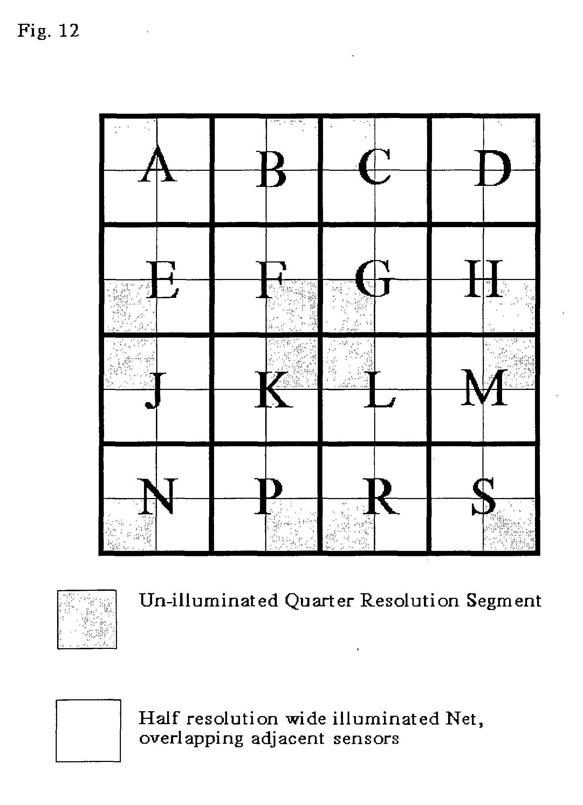

Figs.9 to Fig.12 show a 16 sensor array with the different positions of the Maximum White network (Light Mask) superimposed.

### 18. Improved Resolution for an opto-electronic sensor array in a Scanning System. (paragraph 4 Note 4 refers)

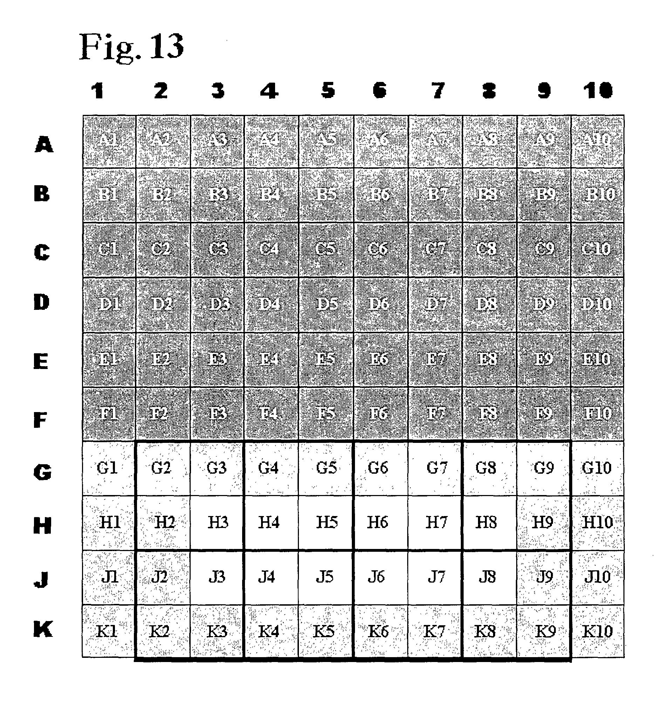

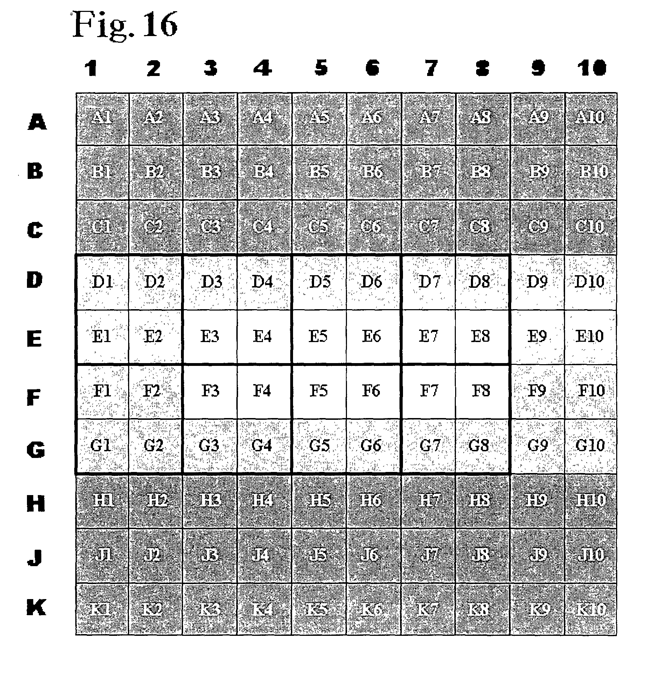

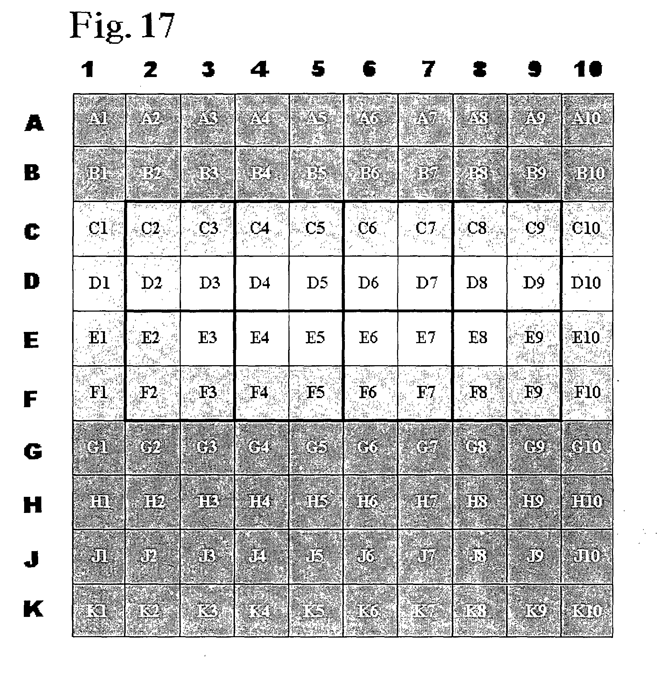

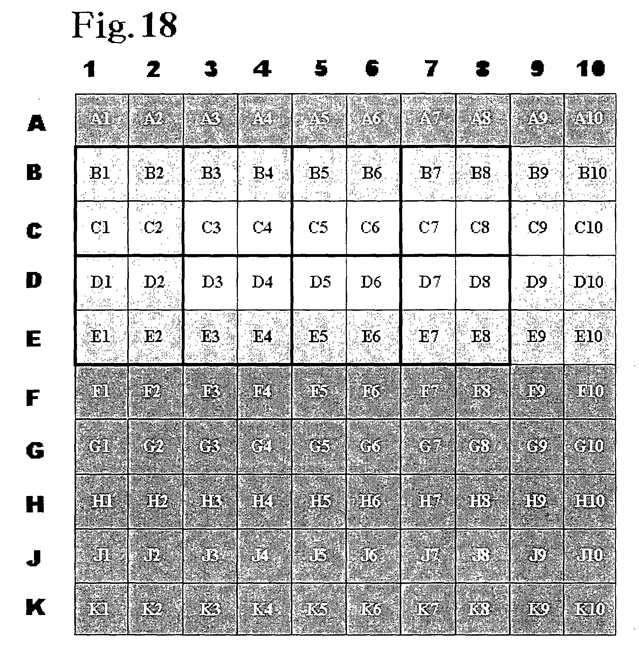

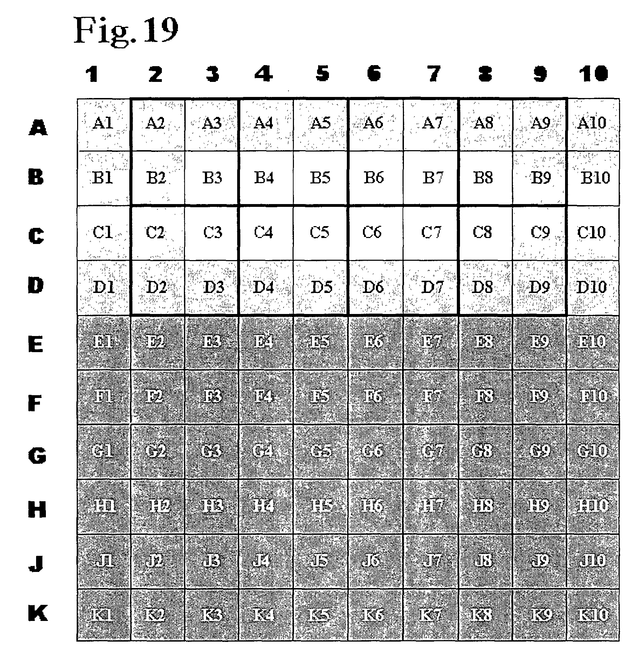

Note 6. This is the special arrangement referred to in paragraph 4 Note 4. It requires an array that consists of two rows of sensors, so as to allow calculation of the image quarter resolution grey scales following displacement of the image and sensors. The sensor array shown gives a fourfold improved resolution and comprises eight sensors, arranged in two rows of four.
Note 7. The mask is space stabilised. The image is displaced with respect to the mask, perpendicular to the mask's long axis. The sensor array moves parallel to the mask's long axis.
Note 8. The diagrams Figs. 13 to 19 represent an image where the quarter resolution segments are shaded dark grey, and identified A1 to K10. These identifications also represent the various *Grey Scale* values of the individual image quarter resolution segments. The heavy Black lines represent a two row array where each row contains four sensors. The light grey area represents a mask that contains a window ( shown white). The size of the window is such that it can occlude the peripheral resolution segments of each of the array's sensors.

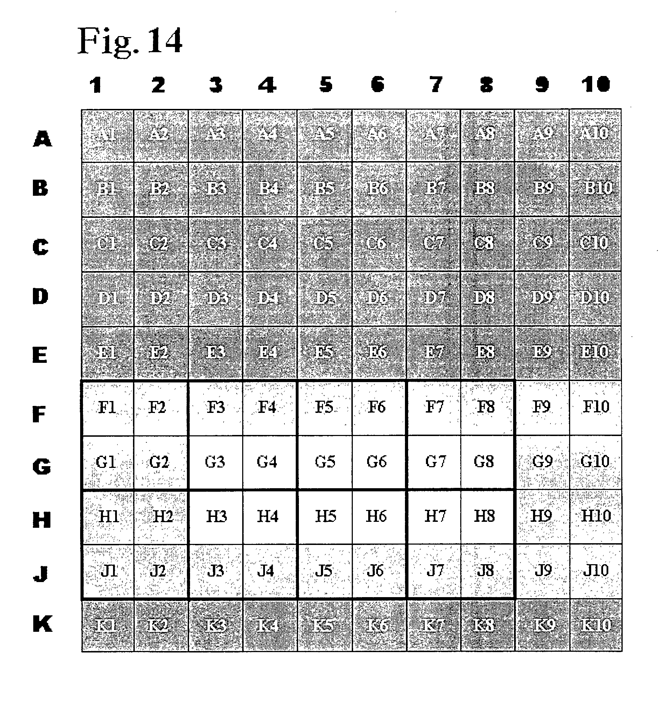

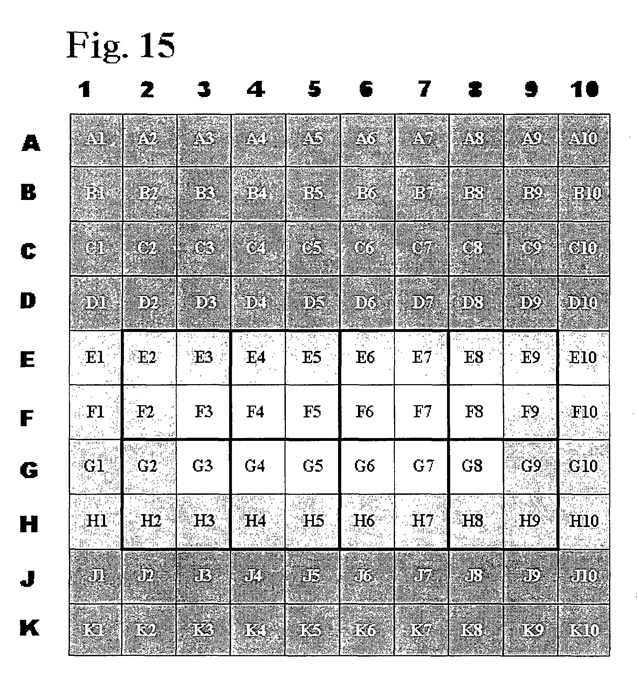

a. Fig. 13 shows the start configuration. In each of the following diagrams ( Figs. 14 to 19), the image is successively advanced, relative to the sensor and mask, by a quarter resolution, and the position of the sensor is successively cycled to and fro, relative to the image and mask, by a quarter resolution in the mask's long axis.
b. In Fig. 13, each of the array's end sensors have only four quarter resolution segments unmasked ( H3, H8,J3,J8 ). Each end sensor's charge is thus due to the image falling on its unmasked quarter resolution segment. This value is digitised and stored, as is the value of the remaining unmasked quarter resolution pairs (H4H5, H6H7, J4J5, and J6J7 ).
c. In Fig 14, the image is advanced by a quarter resolution, relative to the mask and sensor, and the sensor is moved with respect to the image and mask by a quarter resolution. This means that the first two sensors of each row ( F1,F2,G1,G2 and H1,H2,J1,J2) are now masked, and the last two (F7,F8,G7,G8 and H7,H8,J7,J8 ) are half unmasked. The middle four sensors each have a pair of unmasked quarter resolution segments (G3,G4, and G5,G6) and ( H3,H4 and H5,H6). The digitised grey scale values of the unmasked quarter resolution segment pairs are stored. The image movement means row J is now masked and the grey scale values stored for this row will not be required
d. Because H3 and H8 are known ( paragraph 18.f. above ), the values of H4,H5,H6,and H7, can be calculated by referring to the stored pair values ( paragraph 18.f. refers ), and entered on an Image quarter resolution Bit Map.
e. Moving the image by a further quarter resolution, and returning the array to its original position relative to the mask, produces the situation shown in Fig. 15. The end sensors again now have only a quarter resolution segment exposed, so the values for these are now known ( F3,G3 - F8,G8 ) and stored. This allows the unknown quarter resolution segments ( G4,G5,G6,G7 ) to be calculated. The value of the remaining quarter resolution pairs are also stored.
f. Repeating the process described above, allows a quarter resolution grey scale Bit Map to be constructed for the part of the image H3 to B8. which has been progressively exposed to the mask's window. Quarter resolution grey scale values for rows K and J are not calculable, and are ignored.

### 19. Improved resolution in a sensor array with independent movement of the image (paragraph 4 Note 3 refers)

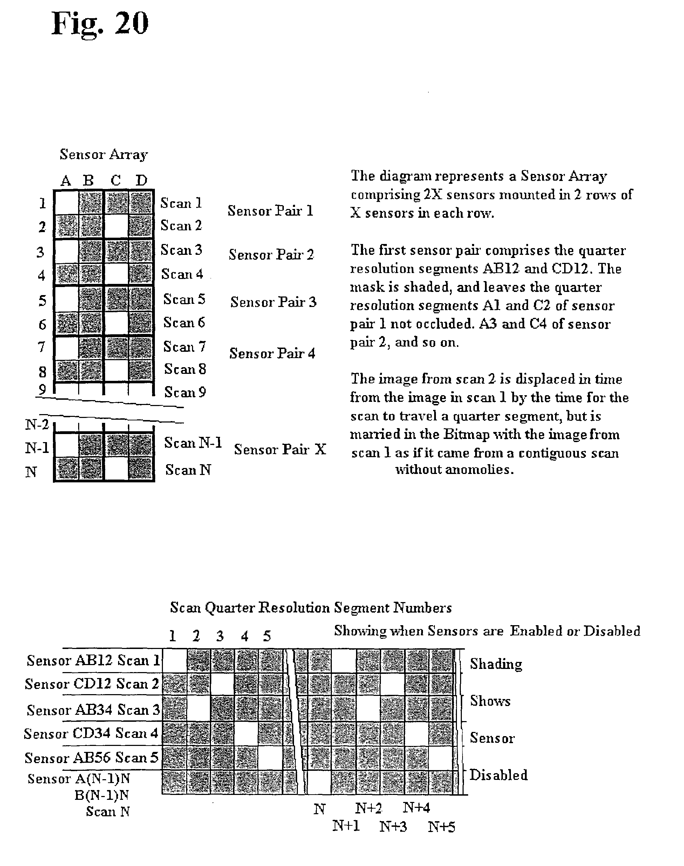

Note 9. Fig. 20 depicts a multiple sensor array giving a fourfold resolution improvement.
   a. Where a moving image is progressively scanned, sequentially pixel by pixel by a multi-facet scanning mirror, as in a linescan equipment, there are separate movements involved due to the scan and the independent image movement. These can be utilised to obtain an improved resolution by synchronously altering their speeds.
   b. The multi-facet scanning mirror has a field of view which allows a multi-sensor array to be used. Due to the image movement, each of the array's sensors will have scanned the same video image pixel.
   c. This allows the use of an interpolation technique in those cases where the response time of the sensors could cause a problem. In this case each sensor is sequentially inhibited for its recovery time. Movement of the video then enables the development of a complete Bitmap of the digitised video quarter resolution grey scales. The video gaps are filled in from later scans, when the same video field is then scanned by a different sensor in the array, at a time when it is not inhibited.
   d. The sensor response time determines the number of sensors required.
   e. As with previous examples, the sensor array is partially masked, and movement of the image relative to the sensor array allows the production of an improved resolution, digitised image grey scale Bitmap.
   f. In order to obtain an improved resolution, the array consists of multiple rows of sensors, each sensor is permanently masked in such a way, so that with its partners in the other rows, a series of contiguous video scans, each an improved resolution wide, is provided. This is because the mask is so constructed that only one of each sensor's improved resolution segments is not occluded. This. together with the image movement. negates the requirement for a separate movement of the sensor with respect to the image, in order to calculate the improved resolution image grey scales, as is the case with the forgoing examples already listed. Differences in the position of the improved resolution video grey scale ( Fig. 20 ), from each of the sensors producing adjacent contiguous scans, are resolved in the construction of the Bitmap.
   g. The number of sensor rows depends on the resolution improvement required.
   h. A fourfold improvement in the resolution would require an array of two rows of partially masked sensors.
   i. A sixteenfold improvement would require an array of four rows of partially masked sensors, etcetera, etcetera, where the improvement in resolution is a function of the square of the number of rows of sensors in the array. In each case, the mask partially occludes all of the array's individual sensors, leaving only a segment equal to the improvement required not occluded.
   j. In each case a bitmap is constructed from the digitised outputs of the equivalent sensors scanned in each row as they are scanned, as described in para 19f. above.
   k. The array is oriented so that its long axis is parallel to the image movement.
   l. The scan is stabilised with the video movement for the duration of each scan by synchronous movement of the sensor array, parallel to the direction of video movement, by a piezo-electric wafer, which also returns the array to its original position at the end of each scan. This produces a half resolution displacement in the next video strip scanned by the sensors. Thus the first sensors of each row will scan previously unscanned video and the rest of the array will fill in interpolation gaps.
   m. The scan speed is synchronised so that the scan from each of the mirror's facets is completed in the time the video travels half a resolution.
   n. As described previously, the video Bitmap is developed from stored video grey scales obtained from each of the sensors after the individual improved video resolution grey scale segment has been scanned.

**Table 1.**

| How Each Quarter Resolution Segment Grey Scale Value Is Determined (para. 5i) | | | | | |
|---|---|---|---|---|---|
| Segment | Fictional Calculated Charge Value | Part of Pair or Group | Total Sensor Charge | Calculated From | Sensor Deflection |
| B2 fig.1 | 9 | | 9) | (Only exposed | Neutral |
| G2 fig.1 | 7 | | 7) | (segments of each of | |
| G7 fig.1 | 3 | | 3) | (the corner sensors at | |
| B7 fig.1 | 5 | | 5) | (the Initial condition. | |
| C2 fig.2 | 7 | B2+C2 | 16 | B2 known | Across |
| D2 fig.1 | 9 | C2+D2 | 16 | C2 calculated | Neutral |
| E2 fig.2 | 7 | D2+E2 | 16 | D2 calculated | Across |
| F2 or fig.1 | 7 | E2+F2 | 16 | E2 calculated | Neutral |
| F2 fig.2 | 7 | F2+G2 | 16 | G2 known | Across |
| C7 fig.2 | 3 | B7+C7 | 8 | B7 known | Across |
| D7 fig.1 | 5 | C7+D7 | 8 | C7 calculated | Neutral |
| E7 fig.2 | 3 | D7+E7 | 8 | D7 calculated | Across |
| F7 or fig.2 | 5 | F7+G7 | 8 | G7 known | Across |
| F7 fig.1 | 5 | E7+F7 | 8 | E7 calculated | Neutral |
| B3 fig.3 | 5 | B2+B3 | 14 | B2 known | Down |
| B4 fig.1 | 9 | B3+B4 | 14 | B3 calculated | Neutral |
| B5 fig.3 | 5 | B4+B5 | 14 | B4 calculated | Down |
| B6 fig.1 | 9 | B5+B6 | 14 | B5 calculated | Neutral |
| G3 fig.3 | 3 | G2+G3 | 10 | G2 known | Down |
| G4 fig.1 | 7 | G3+G4 | 10 | G3 calculated | Neutral |
| G5 fig.3 | 3 | G4+G5 | 10 | G4 calculated | Down |
| G6 fig.1 | 7 | G5+G6 | 10 | G5 calculated | Neutral |
| C3 fig.4 | 3 | B2B3C2C3 | 24 | C3 only unknown | All |
| F3 fig.4 | 5 | F2F3G2G3 | 24 | F3 only unknown | Across |
| C6 fig.4 | 7 | B6B7C6C7 | 24 | C6 only unknown | and |
| F6 fig.4 | 9 | F6F7G6G7 | 24 | F6 only unknown | Down |
| D3 fig.3 | 5 | C2C3D2D3 | 24 | D3 only unknown | Down |
| E3 fig.3 | 3 | E2E3F2F3 | 24 | E3 only unknown | Down |
| D6 fig.3 | 9 | C6C7D6D7 | 24 | D6 only unknown | Down |
| E6 fig.3 | 7 | E6E7F6F7 | 24 | E6 only unknown | Down |
| C4 fig.2 | 7 | B3C3B4C4 | 24 | C4 only unknown | Across |
| F4 fig.2 | 9 | F3G3F4G4 | 24 | F4 only unknown | Across |
| C5 fig.2 | 3 | B5C5B6C6 | 24 | C5 only unknown | Across |
| F5 fig.2 | 5 | F5G5F6G6 | 24 | F5 only unknown | Across |
| D4 fig.1 | 9 | C3D3C4D4 | 24 | D4 only unknown | neutral |
| D5 fig.1 | 5 | C5D5C6D6 | 24 | D5 only unknown | neutral |
| E4 fig.1 | 7 | E3E4F3F4 | 24 | E4 only unknown | neutral |
| E5 fig.1 | 3 | E5E6F5F6 | 24 | E5 only unknown | neutral |

## Claims

1. A method of improving the resolution of an image scanning electronic sensor array having a plurality of light sensitive elements, the method comprising:
introducing means between the sensor array and the image and positioning said means so as to partially affect selected sensors in the array,
relative displacement of the sensor array with respect to said means,
calculation of improved resolution grey scale values from the changes in the sensor array's output.

2. The method of claim 1 in which said means is a mask adapted to partially oclud said sensor array.

3. The method of claim 1, in which said means is a light source.

4. An improved resolution image scanning device comprising
an electronic sensor array having a plurality of light sensitive elements,
a means located between said sensor array and the image, said means being displacable relative to said sensor array and adapted to partially affect by its position selected sensors in the array,
and calculation means for calculating improved resolution grey scale values from the changes in the sensor array's output.

5. The device of claim 4, in which said means comprises a partially occluding mask.

6. The device of claim 4, in which said means comprises a light source.
